# EUROPEAN PATENT SPECIFICATION

(11) **EP 4 001 103 B1**
(45) Date of publication and mention of the grant of the patent: **03.12.2025**
(21) Application number: 21200680.3
(22) Date of filing: 04.10.2021
(51) Int. Cl.: B64C 13/36, F15B 15/14, F15B 15/26

(54) **ACTUATOR**
AKTUATOR
ACTIONNEUR

(30) Priority: 19.11.2020 US 202063115852 P
(43) Date of publication of application: 25.05.2022
(73) Proprietor: The Boeing Company, Arlington, VA 22202 (US)
(72) Inventor: BHASKAR, Bhuvan, Chicago 60606 (US); SHINDE, Jagdish L., Chicago 60606 (US); SREEDHAR, Vinay, Chicago 60606 (US); ANA, Prashantha K., Chicago 60606 (US); GURUSAMY, Kiritharan, Chicago 60606 (US)
(74) Representative: Lissandrini, Marco

(56) References cited:
- DE-A1- 102004 063 362
- DE-A1- 102007 048 907
- FR-A- 1 189 523
- GB-A- 458 005
- GB-A- 861 546
- US-A- 3 107 933
- US-A- 3 813 065
- US-A1- 2014 102 291

## Description

### TECHNICAL FIELD

The present disclosure relates generally to aircraft flight control systems, and more particularly to actuators configured to control a flight control member of an aircraft.

### BACKGROUND

Aircraft include one or more movable flight control members allowing pilots and/or on-board systems to adjust and control the attitude of the aircraft during flight. Some typical flight control members found on aircraft include, but are not limited to, ailerons on the wings for roll control, elevators on the horizontal tail of the empennage for pitch control, a rudder on the vertical tail of the empennage for yaw control, as well as various other movable control surfaces.

The movement of flight control members is typically effected by one or more actuators mechanically coupled between a base on the aircraft (e.g., a wing spar) and the flight control member. Generally, such actuators operate hydraulically and are a supplier designed part. However, because of their complex design and large number of different parts, the manufacture and servicing of conventional actuators is not very economical. Particularly, conventional actuator designs call for a large number of different parts manufactured from a variety of different metals and metal alloys. Not only does this make conventional actuators more expensive and complex to manufacture and maintain, but it also causes long waiting periods for servicing and increased turnaround time. There is a desire to address these issues associated with conventional actuators for flight control members.

Document US 2014/0102291 A1, in accordance with its abstract, states a hydraulic fluid power cylinder assembly that includes a cylinder chamber, a piston, a piston rod and an end cap. End cap includes a drift stop chamber and a drift stop blocking surface. Chamber is in open fluid pressure communication with chamber under all conditions. Piston includes a piston body portion and a drift stop body portion. Drift stop body portion includes a drift stop blocking member and a positioning surface for preventing the blocking member from contacting the walls of cavity and cylinder chamber when disengaged from blocking surface. In one position drift stop body portion is received within drift stop cavity, and blocking member engages blocking surface to prevent unintended movement of piston.

Document FR 1189523 A, in accordance with an English translation of its introductory part, states an electric switch device operated by a pressure medium and consisting of a cylinder with a working piston acted upon by a pressure medium, the working piston being provided with stop elements movable perpendicular to its axis and configured to engage a groove provided on the inner wall of the cylinder.

Document DE 102004063362 A1, in accordance with its abstract, states a piston-cylinder unit having a device for locking a working piston, including at least one locking element which can be forcibly moved by pressure acting on a pivoted lever arm, the first end of which is on the locking element, and the second end on the locking piston, so that the piston is movable by pressure from its rest position, turning the lever arm.

Document US 3,813,065, in accordance with its abstract, states a locking mechanism for coaxial load carrying members, which utilizes a one piece split, chamfered locking ring as a locking member between the load carrying members. Application of predetermined loads to the load carrying members releases the locking ring from its locking condition by flexure of the ring.

### BRIEF SUMMARY

Aspects of the present disclosure relate to a mechanical actuator having an improved locking mechanism and fewer components. Because of these aspects, actuators configured according to the present disclosure are less complex than conventional actuators, and cheaper to manufacture and maintain. Further, the waiting periods related to servicing such actuators are decreased, as is the turnaround time, thereby helping to address issues associated with conventional actuators.

Accordingly, in one aspect, an actuator for a flight control member is defined in claim 1. Further optional features are provided in the claims dependent thereon.

In another aspect, a method of operating an actuator for a flight control member is defined in claim 6.

Further optional steps are provided in the claims dependent thereon.

In one aspect, the vehicle is an aircraft. In these aspects, at least one of the one or more actuators is disposed on a flight control member of the aircraft.

### BRIEF DESCRIPTION OF THE DRAWINGS

Aspects of the present disclosure are illustrated by way of example and are not limited by the accompanying figures with like references indicating like elements.
Figure 1 is a perspective view of a vehicle configured with an actuator according to one aspect of the present disclosure.
Figure 2 is a perspective view of an actuator configured according to one aspect of the present disclosure installed on a wing of an aircraft.
Figure 3A is a cut-away view illustrating an actuator in a retracted position according to one aspect of the present disclosure.
Figure 3B is a cut-away view illustrating an actuator in an extended position according to one aspect of the present disclosure.
Figures 3C-3D are cut-away views illustrating a locking mechanism configured according to aspects of the present disclosure.
Figure 4A is a cut-away view illustrating a castle-nut configured with seals according to one aspect of the present disclosure.
Figure 4B is a cut-away view illustrating a castle-nut configured without seals according to one aspect of the present disclosure.
Figure 5 is a flow chart illustrating a method for operating an actuator according to one aspect of the present disclosure.
Figure 6 is a flow chart illustrating a method for moving the locking mechanism of an actuator according to one aspect of the present disclosure.
Figure 7 is a flow chart illustrating a method for operating an actuator with a castle nut configured according to one aspect of the present disclosure.

### DETAILED DESCRIPTION

Aspects of the present disclosure relate to a mechanical actuator having an improved locking mechanism and fewer components, compared to conventional actuators. Particularly, in one aspect, an actuator configured according to the present disclosure has a cylinder, a locking recess formed on an interior wall of the cylinder, and a piston assembly that moves between an extended position and a retracted position responsive to fluid pressure within the cylinder. A lock is connected to the piston assembly and moves radially between a locked position and an unlocked position responsive to the fluid pressure within the cylinder. In the locked position, a biasing member radially biases the lock towards the locking recess such that the lock engages the locking recess. So engaged, the lock prevents movement of the piston assembly within the cylinder. In the unlocked position, the lock disengages from the locking recess, thereby allowing the piston assembly to move within the cylinder.

Actuators configured according to the present disclosure create or contribute to a system that provides significant benefits over conventional actuators by reducing the number of component parts used to build such actuators. Particularly, fewer component parts reduce the complexity of the actuators, thereby resulting in a significant cost savings in the manufacture and maintenance of the actuators. Additionally, fewer component parts reduce the weight of a vehicle that utilizes the actuators. This means that the cost to operate the vehicle is also positively affected.

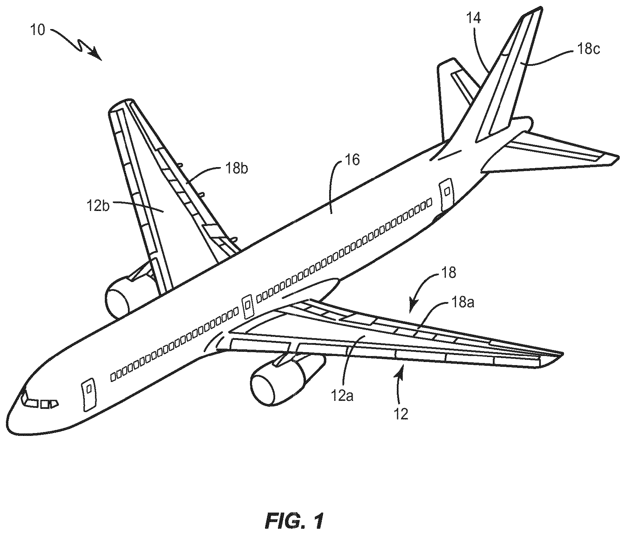

Turning now to the drawings, Figure 1 illustrates an aircraft 10 configured with one or more actuators according to one aspect of the present disclosure. As seen in Figure 1, aircraft 10 comprises a pair of wing members 12a, 12b (collectively, wings 12) and a tail section 14 connected to a fuselage 16. A plurality of different types of flight control members 18a, 18b, 18c (collectively, flight control members 18) are distributed on aircraft 10. By way of non-limiting example, the flight control members 18 can be disposed on wings 12 or the tail section 14, and can include but are not limited to a rudder, elevators, ailerons, wing leading and trailing edge devices, and spoilers. According to aspects of the present disclosure, the flight control members 18 are movably attached to aircraft 10. During flight, pilots and/or control systems on board aircraft 10 change the orientation of the flight control members 18 using actuators configured according to the present disclosure to adjust and control the attitude of the aircraft.

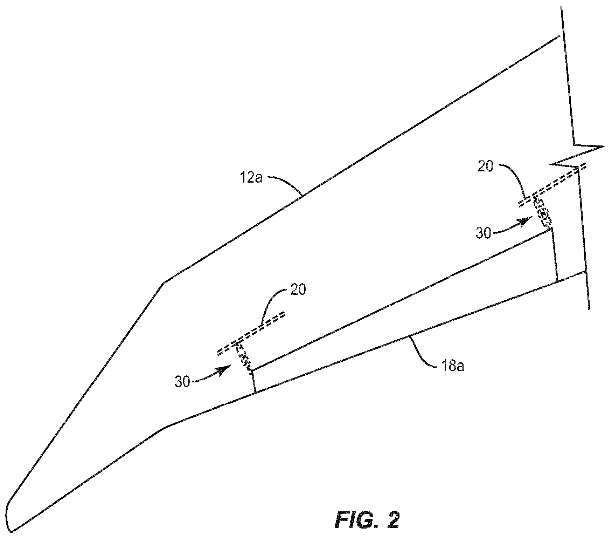

Figure 2 is a top view of wing 12a illustrating possible placements on aircraft 10 for one or more actuators 30 configured to control movement of a flight control member 18a according to one aspect of the present disclosure. As will be readily appreciated by those of ordinary skill in the art, the particular positioning of the actuators 30 on wing 12a is for illustrative purposes only. Indeed, in other aspects, the actuators 30 may be disposed on parts of aircraft 10 other than wing 12a, such as on wing 12b and/or tail section 14, for example, as well as in other positions and orientations. Regardless of the particular placement and orientation, however, actuators 30 are disposed between a support structure 20 of aircraft 10 and flight control member 18a such that actuators 30 control the movement of the flight control member 18a.

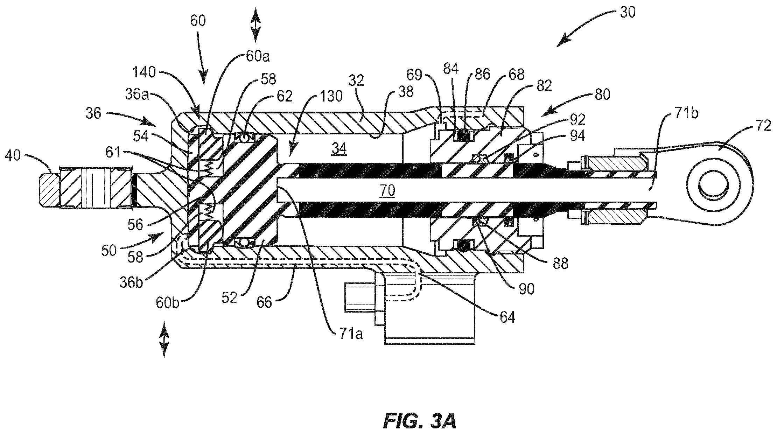

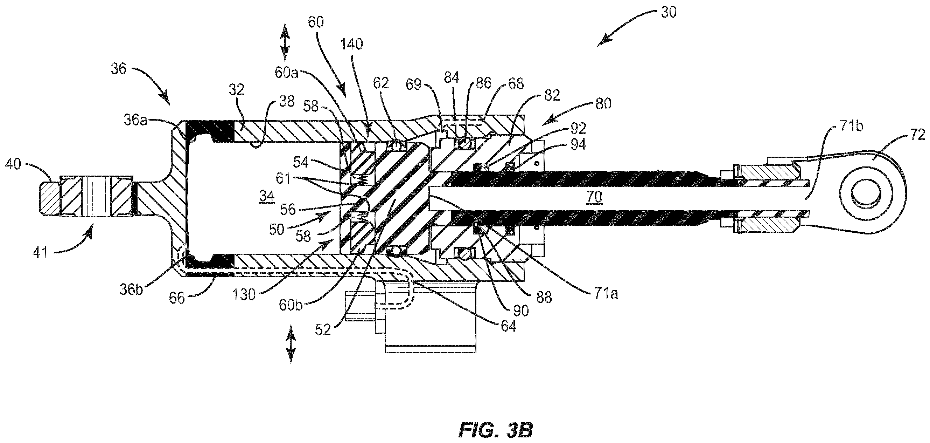

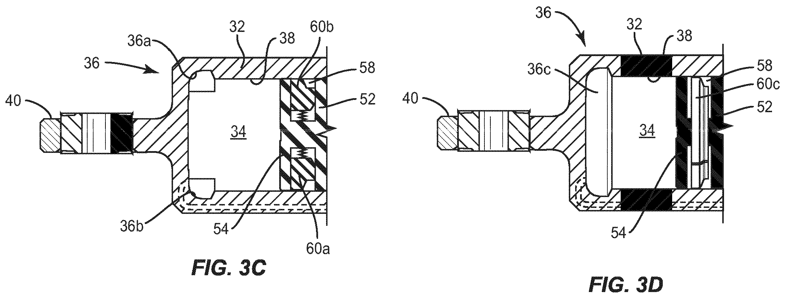

Figures 3A-3D are cut-away views of an actuator 30 configured according to one aspect of the present disclosure. In particular, Figure 3A illustrates actuator 30 in a retracted position and Figure 3B illustrates actuator 30 in an extended position. Figures 3C-3D are close-up views of actuator 30 illustrating an internal structure of actuator 30 according to the present aspects.

As seen in Figures 3A-3D, an actuator 30 configured according to aspects of the present disclosure comprises a cylinder 32 having an internal chamber 34. One or more locking recesses 36a, 36b, 36c (collectively, locking recesses 36) are formed on an interior wall 38 of cylinder 32. In one aspect (Figure 3C), actuator 30 comprises a plurality of locking recesses 36a, 36b formed on the interior wall 38. In this aspect, each locking recess 36a, 36b is formed independently and is spaced-apart from the other locking recess 36a, 36b. In another aspect, however (Figure 3D), actuator 30 comprises a single locking recess 36c formed on the interior wall 38 of cylinder 32 as an annular channel or race. Regardless of the particular structure of the locking recesses 36, however, a piston assembly 130 is disposed within cylinder 32, and is configured to move between the retracted position seen in Figure 3A and the extended position seen in Figure 3B responsive to fluid pressure in chamber 34. One end 41 of the actuator 30 comprises a first connecting member 40 configured to fixedly attach actuator 30 to a support structure 20 on aircraft 10.

The piston assembly 130 comprises a piston head 50 and a piston rod 70. One end 71a of piston rod 70 is connected to piston head 50. The opposite end 71b of piston rod 70 has a connection member 72 configured to attach to a flight control member 18 on aircraft 10. As the piston assembly 130 moves between the extended and retracted positions, the connection member 72 moves the flight control member 18 accordingly.

In this aspect of the present disclosure, piston head 50 is a monolithic member comprising a piston body section 52, a piston cap section 54, and a support section 56 positioned axially between the piston body section 52 and the piston cap section 54. The piston head 50 also comprises a locking mechanism 140 that includes one or more locks 60a, 60b, 60c (collectively, locks 60), a biasing member 61 for each lock 60, one or more cavities 58, and a gasket 62 disposed between the piston body section 52 and the interior wall 38 of cylinder 32. As seen in Figures 3C-3D, the number and structure of locks 60, and of the one or more cavities 58, may depend on the number and structure of locking recesses 36. In one aspect, when actuator 30 is formed to include a plurality of locking recesses 36a, 36b, actuator 30 comprises a plurality of corresponding locks 60a, 60b - one lock for each cavity and locking recess (Figure 3C). In another aspect, however, actuator 30 comprises a single lock 60c (Figure 3D). In these aspects, the single lock 60c has a "slit" cut into it that allows the lock 60c to be squeezed when not engaged with the locking recess 36c. So formed, lock 60c fits within cavity 58 formed in the piston cap section 54, and is configured to slide into and out of locking recess 36c formed as a channel or race on interior wall 38 of cylinder 32.

In at least one aspect, gasket 62 is a rubber gasket (e.g., an O-ring). In operation, gasket 62 forms a seal between the piston body section 52 and the interior wall 38 of cylinder 32 that prevents hydraulic fluid from flowing between the piston body section 52 and the interior wall 38 of cylinder 32.

Each lock 60 is configured to move radially within a corresponding cavity 58 formed within piston head 50 between a locked position (Figure 3A) and an unlocked position (Figure 3B). In the locked position, each lock 60 engages a corresponding locking recess 36a, 36b, and prevents the axial movement of piston assembly 130 between the retracted position and the extended position. In the unlocked position, each lock 60 disengages from its respective locking recess 36 such that piston assembly 130 moves freely from the retracted position to the extended position.

According to the present disclosure, the radial movement of the locks 60 from the locked position to the unlocked position is responsive to the fluid pressure within chamber 34. To accomplish this, one aspect of cylinder 32 comprises a first conduit 66 connected to an extension port 64 and a second conduit 68 connected to a retraction port 69. When the piston assembly 130 is in the locked position, hydraulic fluid is pumped into cylinder 32 via extension port 64 and enters chamber 34 at or near the piston cap section 54. When the fluid pressure within cylinder 32 and at extension port 64, reaches a predetermined amount (i.e., greater than the biasing force of the biasing members 61), locks 60 disengage locking recesses 36 and move radially towards support section 56. At the same time, hydraulic fluid that is already in chamber 34 is pumped out of cylinder 32 via retraction port 69. Once the locks 60 are fully disengaged from the locking recesses 36, the increasing fluid pressure on piston cap section 54 moves piston assembly 130 towards the extended position.

To move the piston assembly from the extended position to the retracted position, the hydraulic fluid that already exists in chamber 34 is pumped out of cylinder 32 via the extension port 64, while hydraulic fluid is pumped into chamber 34 via retraction port 69. Thus, the pressure of the hydraulic fluid entering chamber 34 via the retraction port 69 (i.e., the pressure of the fluid pressing on the piston body section 52) increases, while the pressure of the hydraulic fluid exiting chamber 34 via extension port 64 (i.e., the pressure of the fluid pressing on the piston cap section 54) decreases. The changes in fluid pressure within chamber 34 move the piston assembly 130 axially from the extended position to the retracted position. Further, because the hydraulic fluid exerts a decreasing amount of fluid pressure on locks 60, the biasing members 61 radially bias the locks 60 back into engagement with the locking recesses 36.

In addition to the piston head 50, actuator 30 is also configured to include a monolithic castle nut 80. As seen in the figures, monolithic castle nut 80 is configured to threadably engage the interior wall 38 of cylinder 32 proximate one end of actuator 30 and comprises a body 82 having an interior wall 82a and an exterior wall 82b, a first channel 84 formed on the exterior wall 82b of the castle nut 80, a second channel 88 formed on the interior wall 82a of the castle nut 80, first and second gaskets 86, 90 (e.g., O-rings) sized to fit within corresponding first and second channels 84, 88, respectively, an end gland scraper 92, and a scraper assembly 94.

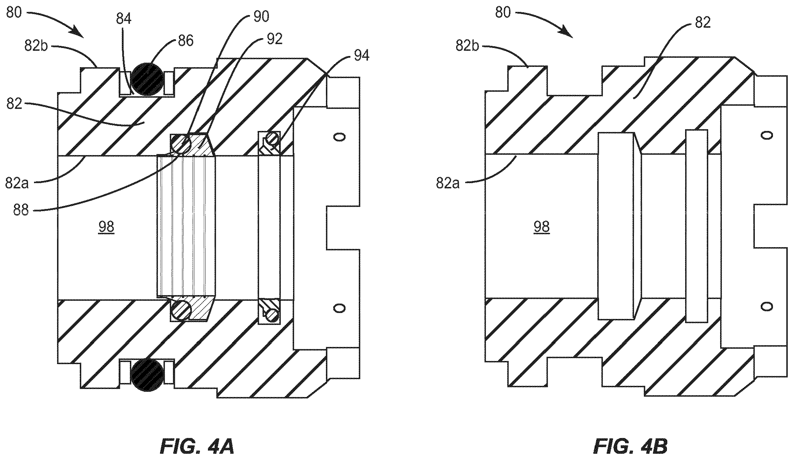

As seen in Figures 3A-3B, the piston rod 70 moves axially through a central bore 98 (best seen in Figures 4A-4B) of castle nut 80 as the piston assembly 130 moves between the extended and retracted positions. Additionally, gaskets 86 and 90 form respective seals to prevent hydraulic fluid from leaking out of chamber 34. In particular, gasket 86 seated in first channel 84 and is configured to form a seal between an exterior wall 82b of castle nut 80 and the interior wall 38 of cylinder 30, and prevents the leakage of hydraulic fluid between interior wall 38 and the body 82 of castle nut 80. Gasket 90 is seated in a second channel 88 and is configured to form a seal between an interior wall 82a of castle nut 80 and the piston rod 70, and prevents the leakage of hydraulic fluid between interior wall 82a of the castle nut 80 and piston rod 70. The end gland scraper 92 is disposed in a channel formed on the interior wall 82a of the castle nut 80, and functions to scrape the piston rod 70 as it moves through the central bore 98 to trap dirt and prevent it from entering chamber 34. The scraper assembly 94 comprises a scraper and a gasket (e.g., another O-ring). The scraper is configured to contact the piston rod 70 as it moves within the central bore 98 and functions to scrape the piston rod 70 as it moves axially through the central bore.

A castle nut 80 configured according to the present aspects provides benefits that conventional castle nuts do not provide. By way of example only, a castle nut 80 configured according to the present aspects is a monolithic member manufactured from titanium. Thus, castle nut 80 comprises fewer component parts than a conventional castle nut. Further, the components parts that are no longer included for castle nut 80 are manufactured from aluminum and aluminum alloys. By eliminating these components, a castle nut 80 configured according to the present disclosure is lighter than a conventional castle nut. Moreover, because the castle nut 80 is monolithic, it is less complex to repair or replace.

Figure 4A illustrates a larger view of the end gland scraper 92 seen in Figures 3A-3B showing the gaskets 86, 90, end gland scraper 92, and scraper assembly 94. As previously described, the first and second channels are sized to receive corresponding first and second gaskets 86, 90. However, those of ordinary skill in the art should appreciate that these components, while useful, may not be included in some examples of actuator 30. For instance, in at least one embodiment, seen in Figure 4B, the monolithic castle nut 80 does not include the gaskets 86, 90, end gland scraper 92, and scraper assembly 94. By also removing these components, this aspect of the present disclosure may further decrease the costs associated with manufacturing and maintaining such castle nuts 80 and actuators 30, thereby increasing profitability and savings.

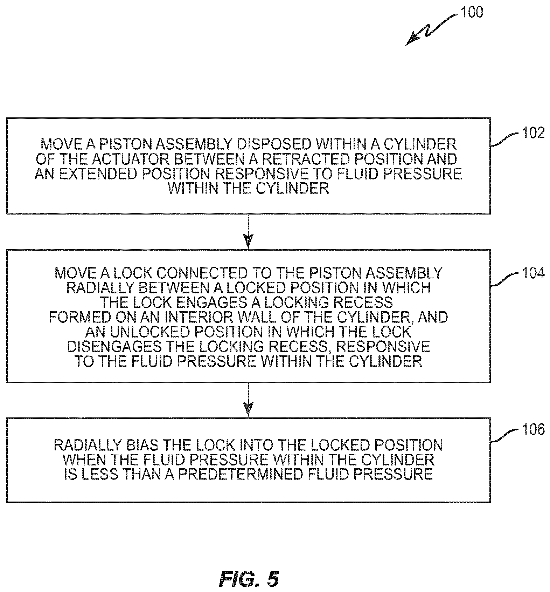

Figure 5 is a flow chart illustrating a method 100 for operating an actuator 30 according to one aspect of the present disclosure. As seen in Figure 5, method 100 begins with moving the piston assembly 130 within cylinder 32 between the retracted position and the extended position (box 102). As previously described, the movement of the piston assembly 130 is responsive to the pressure of the hydraulic fluid within the cylinder 32. Method 100 then calls for moving lock 60 connected to the piston assembly 130 radially between the locked position, in which the lock 60 engages a locking recess formed on an interior wall 38 of cylinder 32, and an unlocked position, in which lock 60 disengages the locking recess 36 (box 104). As stated above, lock 60 moves radially within a cavity 58 responsive to the fluid pressure within cylinder 32. Method 100 then calls for biasing lock 60 into the locked position when the fluid pressure within the cylinder 32 is less than a predetermined fluid pressure (box 106). In one aspect, the biasing member 61 biases the lock 60 into the locked position when the predetermined fluid pressure at the extension port is less than the biasing force exerted on lock 60 by the biasing member 61.

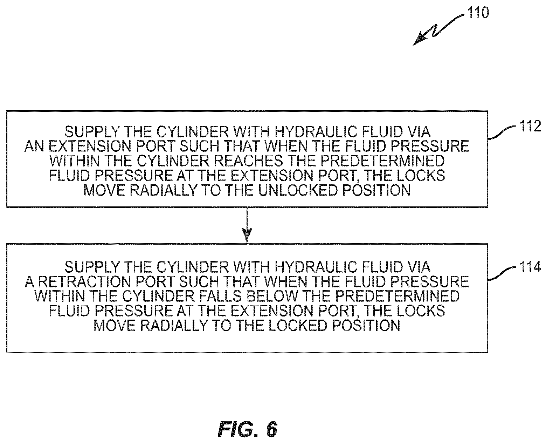

Figure 6 is a flow chart illustrating a method 110 for moving the locking mechanism 140 of an actuator 30 according to one aspect of the present disclosure. As seen in Figure 6, method 110 calls for supplying cylinder 32 with hydraulic fluid via extension port 64 such that when the fluid pressure at extension port 64 reaches the predetermined fluid pressure (e.g., greater than the biasing force exerted on lock 60 by biasing member 61), lock 60 moves radially to the unlocked position (box 112). To move the locking mechanism 140 to the locked position, method 110 calls for supplying cylinder 32 with hydraulic fluid via retraction port 69 such that when the fluid pressure at extension port 64 falls below the predetermined fluid pressure (e.g., is less than the biasing force exerted on lock 60 by biasing member 61), lock 60 moves radially to the locked position (box 114).

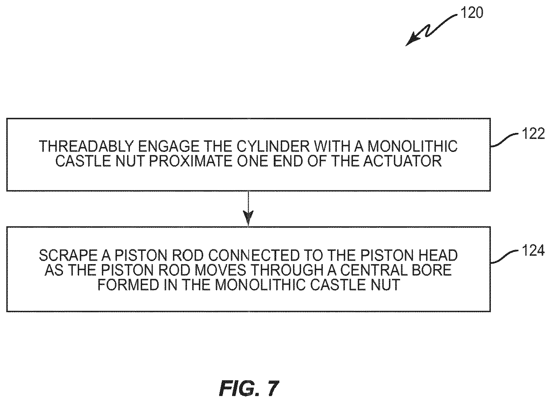

Figure 7 is a flow chart illustrating a method 120 for operating an actuator 30 with a monolithic castle nut 80 according to one aspect of the present disclosure. As seen in Figure 7, method 120 calls for threadably engaging cylinder 32 with the monolithic castle nut 80 proximate one end of an actuator 30 (box 122). In one aspect, castle nut 80 comprises an end gland scraper 92. In these aspects, then, method 120 calls for scraping piston rod 70 as it moves through a central bore 98 formed in the monolithic castle nut 80 (box 124). The end gland scraper 92, as described above, removes dirt from piston rod 70 and traps the dirt thereby preventing it from entering chamber 34.

In the present disclosure, methods 100, 110, and 120 are illustrated and explained as respective figures. However, those of ordinary skill in the art should readily appreciate that this is for illustrative purposes only. In some aspects, method 100 illustrated in Figure 5 can further include the steps of methods 110 and/or 120 of Figures 6 and 7, respectively.

The foregoing description and the accompanying drawings represent non-limiting examples of the methods and apparatus taught herein. For example, the present disclosure describes an actuator 30 in the context of an aircraft 10. However, those of ordinary skill in the art will readily appreciate that this is for illustrative purposes only, and that the aspects described herein are not limited solely to use in aircraft. Rather, the previously described aspects can be implemented on other types of vehicles to achieve the same or similar benefits. Such vehicles include, but are not limited to, manned and unmanned automobiles, manned and unmanned aircraft, manned and unmanned rotorcraft, manned and unmanned rockets and/or missiles, manned and unmanned surface water borne craft, manned and unmanned subsurface water borne craft, and the like, as well as combinations thereof. As such, the aspects of the present disclosure are not limited by the foregoing description and accompanying drawings. Instead, the aspects of the present disclosure are limited only by the following claims.

## Claims

1. An actuator (30) for a flight control member (18), the actuator comprising:
a cylinder (32);
one or more locking recesses (36a, 36b) formed on an interior wall (38) of the cylinder (32);
a piston assembly (130) disposed within the cylinder (32), and configured to move between a retracted position and an extended position and vice versa responsive to fluid pressure within the cylinder (32), wherein the piston assembly (130) comprises a piston head (50) and a piston rod (70) connected to the piston head (50);
an extension port (64) through which fluid enters the cylinder (32) to move one or more locks (60) of a locking mechanism (140);
a retraction port (69) through which fluid enters the cylinder (32) to move the piston assembly (130) to the retracted position,
wherein the locking mechanism (140) is connected to the piston assembly (130) and comprises:
the one or more locks (60), each lock configured to move radially between a locked position in which the lock engages a corresponding locking recess (36a, 36b), and an unlocked position in which the lock disengages the corresponding locking recess (36a, 36b); and
a biasing member (61) for each lock (60), the biasing member (61) being configured to radially bias the lock (60) into the locked position when the fluid pressure at the extension port and exerted on each lock (60) is less than a predetermined fluid pressure, said predetermined fluid pressure corresponding to a pressure that generates a force overcoming a biasing force exerted on the one or more locks (60) by the biasing member (61), the one or more locks (60) moving radially to the unlocked position when the fluid pressure at the extension port is not less than said predetermined fluid pressure,
wherein the piston head (50) is a monolithic member comprising:
a piston body section (52);
a piston cap section (54);
a support section (56) positioned axially between the piston body section (52) and the piston cap section (54),
the actuator (30) further comprising one or more cavities (58) formed between the piston cap section (52) and the piston body section (54), wherein the one or more locks (60) are configured to move radially within the one or more cavities (58) between the locked and unlocked positions,
and wherein each biasing member (61) is disposed within a corresponding cavity (58) between the support section and a corresponding lock of the one or more locks (60).

2. The actuator of claim 1, further comprising a castle nut (80) threadably engaged with the cylinder (32) proximate one end of the actuator (30), and comprising a central bore (98) configured to receive the piston rod (70) therethrough.

3. The actuator of claim 2, wherein the castle nut (80) is a monolithic member and further comprises a scraper assembly (94) comprising a scraper (92) configured to contact the piston rod (70) as the piston rod (70) moves within the central bore (98).

4. The actuator of claim 3, wherein the castle nut (80) further comprises one or more channels (84, 88) formed thereon, with each channel sized to receive a corresponding gasket (86, 90).

5. The actuator of claims 3 or 4, wherein the castle nut (80) further comprises:
a first gasket (86) seated in a first channel (84) and configured to form a seal between an exterior wall (82b) of the castle nut (80) and an interior wall (38) of the cylinder (32); and
a second gasket (90) seated in a second channel (88) and configured to form a seal between an interior wall (82a) of the castle nut (80) and the piston rod (70).

6. A method (100) of operating an actuator (30) for a flight control member (18) according to any of claims 1 to 5, the method comprising:
moving (102) the piston assembly (130) disposed within the cylinder (32) of the actuator (30) between the retracted position and the extended position responsive to fluid pressure within the cylinder (32);
moving (104) the one or more locks (60) connected to the piston assembly (130) radially between the locked position in which each of the one or more locks (60) engages the corresponding locking recess (36a, 36b) formed on the interior wall (38) of the cylinder (32), and the unlocked position in which each of the one or more locks (60) disengages the corresponding locking recess (36a, 36b), responsive to the fluid pressure at the extension port (64) and exerted on each lock (60); and
radially (106) biasing the lock (60) into the locked position when the fluid pressure within the cylinder (32) is less than the predetermined fluid pressure,
wherein radially moving the one or more locks (60) between the locked position and the unlocked position comprises supplying (112) the cylinder (32) with hydraulic fluid via the extension port (64) such that when the fluid pressure at the extension port reaches the predetermined fluid pressure, the one or more locks (60) move radially to the unlocked position, wherein said predetermined fluid pressure corresponds to a pressure that generates a force overcoming the biasing force exerted on the one or more locks (60).

7. The method of claim 6, wherein each of the one or more locks (60) are radially biased within the cavity (58) towards the corresponding locking recess (36a, 36b) formed on the interior wall (38) of the cylinder (32).

8. The method of claims 6 or 7 , further comprising threadably engaging (122) the cylinder (32) with a or the monolithic castle nut (80) proximate one end of the actuator (30).

9. The method of claim 8, further comprising the monolithic castle nut (80) scraping (124) a piston rod (70) connected to the piston head (50) as the piston rod (70) moves through the central bore (98) formed in the monolithic castle nut (80).

10. A vehicle, comprising an actuator (30) according to any one of claims 1 to 5.

11. A vehicle according to claim 10, wherein said vehicle is an aircraft (10).

## Patentansprüche

1. Aktuator (30) für ein Flugsteuerglied (18), wobei der Aktuator aufweist:
einen Zylinder (32);
eine oder mehrere Verriegelungsvertiefungen (36a, 36b), die an einer Innenwand (38) des Zylinders (32) ausgebildet sind;
eine Kolbenbaugruppe (130), die innerhalb des Zylinders (32) angeordnet ist und die eingerichtet ist, sich zwischen einer eingefahrenen Position und einer ausgefahrenen Position und sich hin und her zu bewegen in Reaktion auf einen Fluiddruck innerhalb des Zylinders (32), wobei die Kolbenbaugruppe (130) einen Kolbenkopf (50) und eine Kolbenstange (70) aufweist, die mit dem Kolbenkopf (50) verbunden ist;
einen Ausfahranschluss (64), durch den ein Fluid in den Zylinder (32) zum Bewegen von einer oder mehreren Sperreinrichtungen (60) eines Verriegelungsmechanismus (140) eintritt;
einen Einfahranschluss (69), durch den ein Fluid in den Zylinder (32) zum Bewegen der Kolbenbaugruppe (130) in die eingefahrene Position eintritt,
wobei der Verriegelungsmechanismus (140) mit der Kolbenbaugruppe (130) verbunden ist und aufweist:
die eine oder mehreren Sperreinrichtungen (60), wobei jede Sperreinrichtung eingerichtet ist, sich radial zwischen einer verriegelten Position, in der die Sperreinrichtung mit einer entsprechenden Verriegelungsvertiefung (36a, 36b) in Eingriff steht, und einer entriegelten Position zu bewegen, in der die Sperreinrichtung außer Eingriff mit der entsprechenden Verriegelungsvertiefung (36a, 36b) ist; und
ein Spannglied (61) für jede Sperreinrichtung (60), wobei das Spannglied (61) eingerichtet ist, die Sperreinrichtung (60) in die verriegelte Position vorzuspannen, wenn der Fluiddruck am Ausfahranschluss, und der auf jede Sperreinrichtung (60) ausgeübt wird, kleiner als ein vorbestimmter Fluiddruck ist, wobei der vorbestimmte Fluiddruck einem Druck entspricht, der eine Kraft erzeugt, die eine Spannkraft überwindet, die auf die eine oder mehreren Sperreinrichtungen (60) durch das Spannglied (61) ausgeübt wird, wobei sich die eine oder mehreren Sperreinrichtungen (60) radial in die entriegelte Position bewegt bzw. bewegen, wenn der Fluiddruck am Ausfahranschluss nicht kleiner als der vorbestimmte Fluiddruck ist,
wobei der Kolbenkopf (50) ein monolithisches Glied ist, das aufweist:
einen Kolbenkörperabschnitt (52);
einen Kolbenkappenabschnitt (54);
einen Stützabschnitt (56), der axial zwischen dem Kolbenkörperabschnitt (52) und dem Kolbenkappenabschnitt (54) positioniert ist,
wobei der Aktuator (30) ferner einen oder mehrere Hohlräume (58) aufweist, die zwischen dem Kolbenkappenabschnitt (52) und dem Kolbenkörperabschnitt (54) ausgebildet sind, wobei die eine oder mehreren Sperreinrichtungen (60) eingerichtet ist bzw. sind, sich radial innerhalb der einem oder mehreren Hohlräume (58) zwischen den verriegelten und entriegelten Positionen zu bewegen,
und wobei jedes Spannglied (61) innerhalb eines entsprechenden Hohlraums (58) zwischen dem Stützabschnitt und einer entsprechenden Sperreinrichtung der einen oder mehreren Sperreinrichtungen (60) angeordnet ist.

2. Aktuator nach Anspruch 1, der ferner eine Kronenmutter (80) aufweist, die mit dem Zylinder (32) nahe einem Ende des Aktuators (30) im Gewindeeingriff steht und die eine zentrale Bohrung (98) aufweist, die eingerichtet ist, die Kolbenstange (70) dort hindurch aufzunehmen.

3. Aktuator nach Anspruch 2, wobei die Kronenmutter (80) ein monolithisches Glied ist und ferner eine Abstreifanordnung (94) aufweist, die einen Abstreifer (92) aufweist, der eingerichtet ist, die Kolbenstange (70) zu berühren, wenn sich die Kolbenstange (70) innerhalb der zentralen Bohrung (98) bewegt.

4. Aktuator nach Anspruch 3, wobei die Kronenmutter (80) ferner einen oder mehrere Kanäle (84, 88) aufweist, die darauf ausgebildet sind, wobei jeder Kanal dimensioniert ist, eine entsprechende Dichtung (86, 90) aufzunehmen.

5. Aktuator nach Anspruch 3 oder 4, wobei die Kronenmutter (80) ferner aufweist:
eine erste Dichtung (86), die in einem ersten Kanal (84) sitzt und die eingerichtet ist, eine Dichtung zwischen einer Außenwand (82b) der Kronenmutter (80) und einer Innenwand (38) des Zylinders (32) auszubilden; und
eine zweite Dichtung (90), die in einem zweiten Kanal (88) sitzt und die eingerichtet ist, eine Dichtung zwischen einer Innenwand (82a) der Kronenmutter (80) und der Kolbenstange (70) auszubilden.

6. Verfahren (100) zum Betreiben eines Aktuators (30) für ein Flugsteuerglied (18) gemäß einem der Ansprüche 1 bis 5, wobei das Verfahren aufweist:
Bewegen (102) der Kolbenbaugruppe (130), die innerhalb des Zylinders (32) des Aktuators (30) angeordnet ist, zwischen der eingefahrenen Position und der ausgefahrenen Position in Reaktion auf ein Fluiddruck innerhalb des Zylinders (32);
Bewegen (104) der einen oder mehreren Sperreinrichtungen (60), die mit der Kolbenbaugruppe (30) verbunden ist bzw. sind, radial zwischen der verriegelten Position, in der jede der einen oder mehreren Sperreinrichtungen (60) mit der entsprechenden Verriegelungsvertiefung (36a, 36b) in Eingriff steht, die an der Innenwand (38) des Zylinders (32) ausgebildet ist, und der entriegelten Position, in der jede der einen oder mehreren Sperreinrichtungen (60) außer Eingriff mit der entsprechenden Verriegelungsvertiefung (36a, 36b) ist, in Reaktion auf den Fluiddruck am Ausfahranschluss (64), und der auf jede Sperreinrichtung (60) ausgeübt wird; und
radiales (106) Spannen der Sperreinrichtung (60) in die verriegelte Position, wenn der Fluiddruck innerhalb des Zylinders (32) kleiner als der vorbestimmte Fluiddruck ist,
wobei ein radiales Bewegen der einen oder mehreren Sperreinrichtungen (60) zwischen der verriegelten Position und der entriegelten Position ein Versorgen (112) des Zylinders (32) mit einem Hydraulikfluid über den Ausfahranschluss (64) aufweist, so dass, wenn der Fluiddruck beim Ausfahranschluss den vorbestimmten Fluiddruck erreicht, sich die eine oder mehreren Sperreinrichtungen (60) radial in die entriegelte Position bewegt bzw. bewegen, wobei der vorherbestimmte Fluiddruck einem Druck entspricht, der eine Kraft erzeugt, die die Spannkraft überwindet, die auf die eine oder mehreren Sperreinrichtungen (60) ausgeübt wird.

7. Verfahren nach Anspruch 6, wobei jede der einen oder mehreren Sperreinrichtungen (60) radial innerhalb des Hohlraums (58) in Richtung der entsprechenden Verriegelungsvertiefung (36a, 36b) vorgespannt ist, die an der Innenwand (38) des Zylinders (32) ausgebildet ist.

8. Verfahren nach Anspruch 6 oder 7, das ferner ein Ingewindeeingriffbringen (122) des Zylinders (32) mit einer oder der monolithischen Kronenmutter (80) nach einem Ende des Aktuators (30) aufweist.

9. Verfahren nach Anspruch 8, das ferner aufweist, dass die monolithische Kronenmutter (80) eine Kolbenstange (70), die mit dem Kolbenkopf (50) verbunden ist, abstreift (124), wenn sich die Kolbenstange (70) durch die zentrale Bohrung (98) bewegt, die in der monolithischen Kronenmutter (80) ausgebildet ist.

10. Fahrzeug, das einen Aktuator (30) gemäß einem der Ansprüche 1 bis 5 aufweist.

11. Fahrzeug nach Anspruch 10, wobei das Fahrzeug ein Luftfahrzeug (10) ist.

## Revendications

1. Actionneur (30) pour un organe de commande de vol (18), l'actionneur comprenant :
un vérin (32) ;
un ou plusieurs évidements de verrouillage (36a, 36b) formés sur une paroi intérieure (38) du vérin (32) ;
un ensemble piston (130) disposé au sein du vérin (32), et configuré pour se déplacer entre une position rétractée et une position déployée et vice versa en réponse à une pression de fluide au sein du vérin (32), dans lequel l'ensemble piston (130) comprend une tête de piston (50) et une tige de piston (70) reliée à la tête de piston (50) ;
un orifice de déploiement (64) par lequel un fluide pénètre dans le vérin (32) pour déplacer un ou plusieurs verrous (60) d'un mécanisme de verrouillage (140) ;
un orifice de rétraction (69) par lequel un fluide pénètre dans le vérin (32) pour déplacer l'ensemble piston (130) vers la position rétractée,
dans lequel le mécanisme de verrouillage (140) est relié à l'ensemble piston (130) et comprend :
les un ou plusieurs verrous (60), chaque verrou étant configuré pour se déplacer radialement entre une position verrouillée dans laquelle le verrou se met en prise avec un évidement de verrouillage (36a, 36b) correspondant, et une position déverrouillée dans laquelle le verrou se désolidarise de l'évidement de verrouillage (36a, 36b) correspondant ; et
un organe de sollicitation (61) pour chaque verrou (60), l'organe de sollicitation (61) étant configuré pour solliciter radialement le verrou (60) jusque dans la position verrouillée lorsque la pression de fluide au niveau de l'orifice de déploiement et exercée sur chaque verrou (60) est inférieure à une pression de fluide prédéterminée, ladite pression de fluide prédéterminée correspondant à une pression qui génère une force surmontant une force de sollicitation exercée sur les un ou plusieurs verrous (60) par l'organe de sollicitation (61), les un ou plusieurs verrous (60) se déplaçant radialement vers la position déverrouillée lorsque la pression de fluide au niveau de l'orifice de déploiement n'est pas inférieure à ladite pression de fluide prédéterminée, dans lequel la tête de piston (50) est un organe monolithique comprenant :
une section corps de piston (52) ;
une section chapeau de piston (54) ;
une section de support (56) positionnée de manière axiale entre la section corps de piston (52) et la section chapeau de piston (54),
l'actionneur (30) comprenant en outre une ou plusieurs cavités (58) formées entre la section chapeau de piston (52) et la section corps de piston (54), dans lequel les un ou plusieurs verrous (60) sont configurés pour se déplacer radialement au sein des une ou plusieurs cavités (58) entre les positions verrouillée et déverrouillée,
et dans lequel chaque organe de sollicitation (61) est disposé au sein d'une cavité (58) correspondante entre la section de support et un verrou correspondant des un ou plusieurs verrous (60).

2. Actionneur selon la revendication 1, comprenant en outre un écrou à créneaux dégagés (80) mis en prise de manière filetée avec le vérin (32) à proximité d'une extrémité de l'actionneur (30), et comprenant un alésage central (98) configuré pour recevoir la tige de piston (70) à travers celui-ci.

3. Actionneur selon la revendication 2, dans lequel l'écrou à créneaux dégagés (80) est un organe monolithique et comprend en outre un ensemble racloir (94) comprenant un racloir (92) configuré pour être en contact avec la tige de piston (70) lorsque la tige de piston (70) se déplace au sein de l'alésage central (98).

4. Actionneur selon la revendication 3, dans lequel l'écrou à créneaux dégagés (80) comprend en outre un ou plusieurs canaux (84, 88) formés sur celui-ci, chaque canal étant dimensionné pour recevoir un joint (86, 90) correspondant.

5. Actionneur selon les revendications 3 ou 4, dans lequel l'écrou à créneaux dégagés (80) comprend en outre :
un premier joint (86) installé dans un premier canal (84) et configuré pour former une étanchéité entre une paroi extérieure (82b) de l'écrou à créneaux dégagés (80) et une paroi intérieure (38) du vérin (32) ; et
un second joint (90) installé dans un second canal (88) et configuré pour former une étanchéité entre une paroi intérieure (82a) de l'écrou à créneaux dégagés (80) et la tige de piston (70).

6. Procédé (100) de fonctionnement d'un actionneur (30) pour un organe de commande de vol (18) selon l'une quelconque des revendications 1 à 5, le procédé comprenant :
le déplacement (102) de l'ensemble piston (130) disposé au sein du vérin (32) de l'actionneur (30) entre la position rétractée et la position déployée en réponse à une pression de fluide au sein du vérin (32) ;
le déplacement (104) des un ou plusieurs verrous (60) reliés à l'ensemble piston (130) radialement entre la position verrouillée dans laquelle chacun des un ou plusieurs verrous (60) se met en prise avec l'évidement de verrouillage (36a, 36b) correspondant formé sur la paroi intérieure (38) du vérin (32), et la position déverrouillée dans laquelle chacun des un ou plusieurs verrous (60) se désolidarise de l'évidement de verrouillage (36a, 36b) correspondant, en réponse à la pression de fluide au niveau de l'orifice de déploiement (64) et exercée sur chaque verrou (60) ; et
la sollicitation de manière radiale (106) du verrou (60) jusque dans la position verrouillée lorsque la pression de fluide au sein du vérin (32) est inférieure à la pression de fluide prédéterminée,
dans lequel le déplacement de manière radiale des un ou plusieurs verrous (60) entre la position verrouillée et la position déverrouillée consiste à alimenter (112) le vérin (32) en fluide hydraulique via l'orifice de déploiement (64) de sorte que, lorsque la pression de fluide au niveau de l'orifice de déploiement atteint la pression de fluide prédéterminée, les un ou plusieurs verrous (60) se déplacent radialement vers la position déverrouillée,
dans lequel ladite pression de fluide prédéterminée correspond à une pression qui génère une force surmontant la force de sollicitation exercée sur les un ou plusieurs verrous (60).

7. Procédé selon la revendication 6, dans lequel chacun des un ou plusieurs verrous (60) est radialement sollicité au sein de la cavité (58) vers l'évidement de verrouillage (36a, 36b) correspondant formé sur la paroi intérieure (38) du vérin (32).

8. Procédé selon les revendications 6 ou 7, comprenant en outre la mise en prise par filetage (122) du vérin (32) avec un ou l'écrou à créneaux dégagés (80) monolithique à proximité d'une extrémité de l'actionneur (30).

9. Procédé selon la revendication 8, comprenant en outre le fait que l'écrou à créneaux dégagés (80) monolithique racle (124) une tige de piston (70) reliée à la tête de piston (50) lorsque la tige de piston (70) se déplace à travers l'alésage central (98) formé dans l'écrou à créneaux dégagés (80) monolithique.

10. Véhicule, comprenant un actionneur (30) selon l'une quelconque des revendications 1 à 5.

11. Véhicule selon la revendication 10, dans lequel ledit véhicule est un aéronef (10).
